# EUROPEAN PATENT APPLICATION

(11) **EP 2 446 785 A1**
(43) Date of publication of application: **02.05.2012**
(21) Application number: 10189537.3
(22) Date of filing: 01.11.2010
(51) Int. Cl.: A47J 31/00, A47J 31/40, A47J 31/44

(54) **Apparatus and method for preparing an infusion**

(71) Applicant: Unilever N.V., 3013 AL Rotterdam (NL)
(72) Inventor: Heuberger, Xaver Ralf, 76646 Bruchsal (DE); Machauer, Patrick Frank, 76646 Bruchsal (DE); Quinn, Anthony Edward, Sharnbrook, Bedfordshire MK44 1LQ (GB)
(74) Representative: Rosen Jacobson, Frans Lucas M.

(57) **Abstract**

The present invention provides an apparatus for preparing an infusion from water and an infusible ingredient, comprising:
(a) a brewing unit (1) suitable for containing the infusible ingredient and the water;
(b) a line (2) connecting the brewing unit with a cooling unit (3), for transporting gas drawn out of the brewing unit;
(c) said cooling unit (3) for cooling said gas;
(d) a line (4) connecting said cooling unit with a cyclone unit (5), for transporting the cooled gas;
(e) said cyclone unit for removing condensed water vapour from the gas transported there trough; and
(f) a vacuum pump (6) for causing gas flow trough the elements mentioned hereinabove under (a) - (e). It was found that when using this apparatus improved vacuum pump performance and more consistent infusion quality were obtainable as compared to known brewing devices of the prior art.

## Description

### Field of the invention

The present invention relates to an apparatus and a method for preparing an infusion from water and an infusible ingredient (such as tea or coffee). The apparatus according to the present invention is suitable for use in beverage vending machines, or more generally for preparing beverages for domestic or commercial purposes.

### Background of the invention

With the exception of water, tea is the most widely consumed of all beverages. Its world-wide per capita consumption has been estimated at 0.1 litre per day. Furthermore, other brewed beverages such as fruit infusions, iced tea and coffee are increasingly consumed world-wide. In western countries, brewed beverages tend to be prepared at home, however, there is a growing trend for consumers to consume such beverages out of the home in, for example, cafes and bars. The teabag is a widely used solution to offer hot tea in these environments. However, the long brewing time and mess after brewing are barriers to consume hot tea out of home. Therefore an alternative brewing method is required, especially for the out of home market.

Brewing devices for making coffee, tea, chocolate or any other beverage are known in the art.

WO 2007/042485 A1 discloses a device for brewing a beverage, containing an infusion container and a cartridge that contains infusible matter. The cartridge is connectable to the infusion container. An open able and closable passage is located underneath the cartridge, which forms a hermetic connection between the infusion container, and the passage.

WO 88/02612 describes a brewing device that contains an infusion chamber with a movable base, and the base is provided with a filter. The device is provided with an air pump that can draw air upwardly through the filter into the chamber during infusion, or can be used to pressurize the infusion chamber for discharging the infused liquid through the filter.

Also cartridges or containers containing infusible materials are known in the art. They usually provide a convenient, rapid and consumer friendly way of brewing a beverage such as coffee or tea.

However, the systems of the prior art have a few disadvantages which will be addressed by the present invention. Known systems of the prior art contain a vacuum pump for drawing gas through the mixture of water and infusible ingredient inside the brewing unit, during the brewing process. More in particular, said gas -which is usually air-, is generally drawn through a perforated base of the brewing unit and leaves said unit at the upper side thereof. Very often, said gas is essential for obtaining a good quality infusion through the increased agitation of the mixture of water and infusible ingredient caused by said gas.. It was now found that the performance of the vacuum pump for drawing said gas through the brewing unit was variable. This poor performance was considered to be caused by condensation of the water vapour present in said gas in the lines through which it was transported as well as in the pump.

It was also found that the performance of the brewing system gradually deteriorated.

This was considered to be caused by an increase in the temperature of the vacuum pump diagram which is likely to negatively affect the pump performance.

As a consequence of the variable performance of the vacuum pump, the performance of the brewing unit is negatively influenced as water is not always adequately retained in the unit, particularly during periods when the pump does not provide adequate driving force. As a result, the quality of the infusion prepared was also found to be variable.

Hence it is an object of the present invention to provide an apparatus and method for preparing an infusion, and thus brewing a beverage, with which the disadvantages of the prior art systems as discussed above can be overcome..

It has now surprisingly been found that said object could be achieved when using an apparatus for preparing an infusion, which is equipped with a cooling unit and a cyclone unit for cooling and drying the gas drawn through and out of the brewing unit. The result of the method of the present invention is a cooled and dried gas stream, free from excessive amounts of water, entering the vacuum pump. As a consequence, much more consistent pump performance, potentially longer pump life and more consistent infusion quality were obtainable.

It is noted in this connection that the gas drawn through the brewing apparatus of the invention by action of the vacuum pump is preferably air.

### Definition of the invention

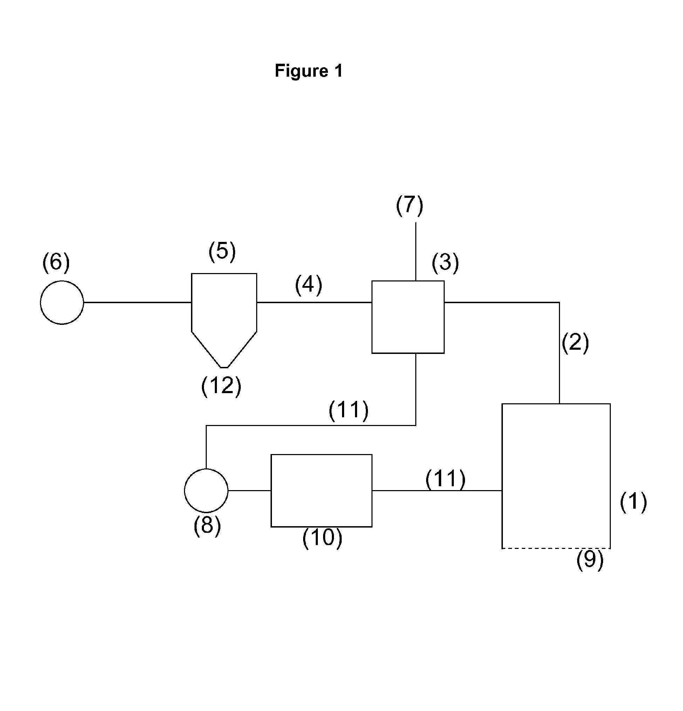

With reference to non-limiting figure 1, in a first aspect the present invention provides an apparatus for preparing an infusion from water and an infusible ingredient, comprising:
(a) a brewing unit (1) suitable for containing the infusible ingredient and the water;
(b) a line (2) connecting the brewing unit with a cooling unit (3), for transporting gas drawn out of the brewing unit;
(c) said cooling unit (3) for cooling said gas;
(d) a line (4) connecting said cooling unit with a cyclone unit (5), for transporting the cooled gas;
(e) said cyclone unit for removing water vapour from the gas transported there through; and
(f) a vacuum pump (6) for causing gas flow trough the elements mentioned hereinabove under (a) - (e).

In a second aspect, the present invention provides a method for preparing an infusion from water and an infusible ingredient, wherein an apparatus according to the present invention is used, said method comprising the steps of:
(a) filling the brewing unit (1) with the infusible ingredient;
(b) starting the vacuum pump (6) for drawing gas out of the brewing unit at the upper side thereof and simultaneously drawing gas into the brewing unit at the lower side thereof;
(c) filling the brewing unit (1) with water, while drawing said gas through the water; and
(d) causing said gas to be cooled and dried before reaching the vacuum pump by transporting it through the cooling unit (3) and the cyclone unit (5).

### Detailed description of the invention

Unless defined otherwise, all technical and scientific terms used herein have the same meaning as commonly understood by one of ordinary skill in the art.

Beverage: As used herein the term "beverage" refers to a substantially aqueous drinkable composition suitable for human consumption. Preferably the beverage comprises at least 85% water by weight of the beverage, more preferably at least 90% and most preferably from 95 to 99%.

Infusible ingredient: As used herein the term "infusible ingredient" refers to substances that when mixed with aqueous liquid release certain substances into the liquid thereby to form a beverage.

Brewing: As used herein, the term "brewing" refers to the addition of a liquid to an infusible material thereby to form a beverage. Brewing may be carried out an any temperature.

Agitation: As used herein, the term "agitation" refers to a process whereby an infusible material and liquid are mixed. In the present case, the agitation is realized by the action of gas (preferably: air).

Tea: as used herein the term "tea" refers to leaf material from *Camellia sinensis var. sinensis* or *Camellia sinensis var. assamica.* It also includes rooibos tea obtained from *Aspalathus linearis.* "Tea" is also intended to include the product of blending two or more of these types of tea. The leaf material may be substantially fermented, i.e. black tea, semi-fermented, i.e. oolong tea, or substantially unfermented, i.e. green tea. Furthermore, the tea may be a flavoured and/or a spiced tea..

With reference to non-limiting figure 1, in a first aspect the present invention provides an apparatus for preparing an infusion from water and an infusible ingredient, as specified in claim 1. In said apparatus the cooling unit (3) is

preferably a cooling block with such configuration that it is suitable for cooling the gas with a stream of cold water. The cooling unit is desirably made from a suitable thermally conductive material. Furthermore, the cyclone unit (5) present in the apparatus of the invention is preferably equipped with a drainage valve (12) at the bottom thereof, through which water vapour removed from the gas stream can be drained in the form of condensate.

In the apparatus shown in Figure 1, a brewing unit (1) for containing the infusible ingredient and the water is present. Said brewing unit contains a perforated base (9) on which -when in use- the infusible ingredient is situated, but through which gas and the infused liquid can pass. By way of said perforated base, the infusion prepared in the brewing unit -which is preferably in the form of tea or coffee- can be obtained.

At the top of the brewing unit, a line (2) is connected to said unit through which gas is drawn out of the headspace of the brewing unit by the action of a vacuum pump (6). Between the vacuum pump (6) and the brewing unit a cooling unit (3), a line (4) and a cyclone unit (5) are present.

Another line (11) connects a water pump (8) to the brewing unit (1). Said water pump (8) transports cold water (7) through the cooling unit (3) where it is used

for cooling down the gas drawn out of the brewing unit. The water is further transported by action of the water pump through a boiler (10) where it is heated before entering the brewing unit. Preferably, the boiler (10) heats the water to a temperature of between 80°C and 100°C, more preferably between 85°C and 95°C.

Alternatively the water may be heated before running through the pump.

In an alternative configuration no pump is used, but the system is connected to a mains water connection whereby the water pressure thereof is used to run the water through the boiler.

After filling the brewing unit with the infusible ingredient the vacuum pump (6) is started and simultaneously a pre-set amount of water is inserted in the brewing unit by starting the water pump (8). By doing so, gas is drawn up through the perforated base in the brewing unit and passes through the (hot) water before entering line (2) in which process the water vapour content of said gas increases.

The gas runs through the cooling unit (3). Cold water (7) is used to cool the channel through which the gas is run, which causes the gas to cool down and water vapour present therein to condense. In the system shown in Figure 1, the cold water (7) is further used to feed the water pump (8) However, alternatively a separate cold water circuit may be used. Furthermore, alternative ways of creating a heat exchanger so as to cool down the gas drawn out of the head space of the brewing unit and to condense the water vapour present therein may also be used.

When in use, the mixture of gas and condensed water vapour is transported through line (4) into the cyclone unit (5) in which the water is separated from the air. The cyclone unit applied in the system shown in Figure 1 is a centrifugal separator and has 1 inlet and 2 outlets. Of these outlets one is connected to the vacuum pump (6) and the other is a drain (12) where the (condensed) water comes out. Said drain (12) is connected to a drip tray or other means to capture the water.

After a pre-set time the beverage can be dispensed into a cup by allowing the beverage to leave the brewing unit (1) through the perforated base (9) or other exit. Preferably the vacuum pump (6) is stopped before releasing the beverage and air is allowed in the headspace of the brewing unit to release the beverage.

The system shown in Figure 1 is controlled by valves and connectors know to the person skilled in the art.

## Claims

1. Apparatus for preparing an infusion from water and an infusible ingredient, comprising:
(a) a brewing unit (1) suitable for containing the infusible ingredient and the water;
(b) a line (2) connecting the brewing unit with a cooling unit (3), for transporting gas drawn out of the brewing unit;
(c) said cooling unit (3) for cooling said gas;
(d) a line (4) connecting said cooling unit with a cyclone unit (5), for transporting the cooled gas;
(e) said cyclone unit for removing condensed water vapour from the gas transported there trough ; and
(f) a vacuum pump (6) for causing gas flow trough the elements mentioned hereinabove under (a) - (e).

2. Apparatus according to claim 1, wherein the cooling unit (3) is a cooling block with such configuration that it is suitable for cooling the gas by a stream of cold water.

3. Apparatus according to claim 2, wherein the cooling block is made from a suitable thermally conductive material.

4. Apparatus according to any of claims 1-3, wherein the cyclone unit (5) is equipped with a tangential inlet and a centrally mounted dip-tube as outlet for the gas.

5. Apparatus according to claim 4, wherein the cyclone unit (5) is equipped with a drainage valve (12) at the bottom thereof, through which the water vapour removed from the air stream, can be drained in the form of condensate.

6. Method for preparing an infusion from water and an infusible ingredient, wherein an apparatus according to any of claims 1-5 is used, said method comprising the steps of:
(a) filling the brewing unit (1) with the infusible ingredient;
(b) starting the vacuum pump (6) for drawing gas out of the brewing unit at the upper side thereof and simultaneously drawing gas into the brewing unit at the lower side thereof;
(c) filling the brewing unit (1) with water, preferably hot water having a temperature of 80°C to 100°C while drawing said gas through the water; and
(d) causing said gas to be cooled and dried before reaching the vacuum pump (6) by transporting it through the cooling unit (3) and the cyclone unit (5).

7. Method according to claim 6, wherein the gas is cooled in the cooling unit (3) with water which is subsequently transported to the brewing unit.

8. Method according to claim 7, wherein said water is transported by a water pump (8) through an air boiler (10).
